# EUROPÄISCHE PATENTSCHRIFT

(11) **EP 0 995 576 B1**
(45) Veröffentlichungstag und Bekanntmachung des Hinweises auf die Patenterteilung: **24.07.2002**
(21) Anmeldenummer: 99118885.5
(22) Anmeldetag: 24.09.1999
(51) Int. Cl.: B29C 45/42, B29C 45/14

(54) **Kunststoff-Spritzgiessanlage**
Plastic injection moulding apparatus
Dispositif de moulage par injection de matière plastique

(30) Priorität: 21.10.1998 DE 19848419
(43) Veröffentlichungstag der Anmeldung: 26.04.2000
(73) Patentinhaber: HEKUMA GmbH, 85386 Eching (DE)
(72) Erfinder: Herbst, Richard, 85386 Eching (DE)
(74) Vertreter: Klingseisen, Franz, Dipl.-Ing.

(56) Entgegenhaltungen:
- EP-A- 0 341 111
- EP-A- 0 718 084

## Beschreibung

Die vorliegende Erfindung betrifft eine Kunststoff-Spritzgießanlage, mit einer Kunststoff-Spritzgießmaschine und mit einem Handlinggerät zum Zuführen und/oder Entnehmen von Werkstükken und/oder Zubehörteilen in die bzw. aus der Spritzgießmaschine, wobei die Spritzgießmaschine ein erstes Gestell und zumindest eine bewegbare Werkzeughälfte aufweist, die relativ zum ersten Gestell entlang einer ersten Bewegungsrichtung bewegbar ist, wobei ferner das Handlinggerät ein zweites Gestell aufweist und wobei die Gestelle über Verbindungselemente miteinander verkoppelt sind.

Die Erfindung betrifft darüber hinaus ein Verfahren zum Spritzgießen von Kunststoffprodukten mit Hilfe einer Kunststoff-Spritzgießanlage, die eine Kunststoff-Spritzgießmaschine und ein Handlinggerät umfaßt, wobei die Spritzgießmaschine ein erstes Gestell und zumindest eine Werkzeughälfte aufweist, die relativ zum ersten Gestell eine Öffnungs- und Schließbewegung entlang einer ersten Bewegungsrichtung ausführt, wobei das Handlinggerät ein mit dem ersten Gestell verkoppeltes zweites Gestell sowie ein Greifwerkzeug aufweist und wobei das Greifwerkzeug zum Zuführen und/oder Entnehmen von Werkstücken und/oder Zubehörteilen entlang einer zweiten Bewegungsrichtung zwischen zumindest zwei Werkzeughälften der Spritzgießmaschine ein- und ausgefahren wird.

Eine derartige Kunststoff-Spritzgießanlage sowie ein derartiges Verfahren sind bereits seit langem im Einsatz und von daher aufgrund Ihrer Verwendung bekannt.

Bei den bekannten Spritzgießanlagen sind das erste Gestell der Spritzgießmaschine und das zweite Gestell des Handlinggerätes üblicherweise fest miteinander verschraubt oder sogar verschweißt. Sinn einer solch starren Verbindung ist es, eine exakte Positionierung des Handlinggerätes gegenüber der Spritzgießmaschine zu gewährleisten.

Der Nachteil einer derartig starren Verbindung ist jedoch, daß sich Schwingungen und Erschütterungen der Kunststoff-Spritzgießmaschine, die aufgrund der Bewegung ihrer Werkzeughälften entstehen, so auf das Handlinggerät übertragen. Hierdurch kann das Handlinggerät in seinem exakten Bewegungsablauf gestört werden. Da das zweite Gestell des Handlinggerätes darüber hinaus üblicherweise fest am Boden fixiert wird, können sich des weiteren Verspannungen in den Gestellen ergeben, die sich ebenfalls nachteilig auf die exakte Positionierung des Handlinggerätes in bezug zu der Spritzgießmaschine auswirken.

Weiterhin ist das Gestell des Handlinggerätes häufig auch mit einem Nachfolgegerät verkoppelt, an das es die aus der Spritzgießmaschine entnommenen Werkstücke weiterreicht oder von dem es Zubehörteile für die herzustellenden Werkstücke erhält. Die genannten Schwierigkeiten und ebenso auch die nachfolgend beschriebenen Maßnahmen gelten somit gleichermaßen auch für diese Ankopplung oder lassen sich zumindest in gleicher Weise auf diese übertragen.

Es ist daher Aufgabe der vorliegenden Erfindung, eine Kunststoff-Spritzgießanlage der eingangs genannten Art derart weiterzubilden, daß die Übertragung von Schwingungen der Spritzgießmaschine auf das Handlinggerät verringert wird. Es ist eine weitere Aufgabe der Erfindung, ein Verfahren der eingangs genannten Art anzugeben, bei dem die Übertragung von Schwingungen von der Spritzgießmaschine auf das Handlinggerät vermindert ist, während gleichzeitig ein exaktes Ein- und Ausfahren des Greifwerkzeugs des Handlinggerätes zwischen die Werkzeughälften der Spritzgießmaschine gewährleistet ist.

Diese Aufgabe wird bei der eingangs genannten Kunststoff-Spritzgießanlage dadurch gelöst, daß die beiden Gestelle entlang mindestens einer ersten Achse relativ zueinander beweglich verkoppelt sind.

Die genannte Aufgabe wird hinsichtlich des Verfahrens dadurch gelöst, daß das erste Gestell und das zweite Gestell relativ zueinander beweglich verkoppelt werden und daß das Greifwerkzeug beim Ein- und Ausfahren zwischen die Werkzeughälften in Abhängigkeit von einer relativen Position zwischen den beiden Gestellen gesteuert wird.

Die erfindungsgemäße Kunststoff-Spritzgießanlage besitzt den Vorteil, daß die beiden Gestelle aufgrund der beweglichen Verkopplung einerseits in einer definierten räumlichen Beziehung zueinander stehen, während andererseits geringfügige Bewegungen der Spritzgießmaschine möglich sind, ohne daß diese auf das Handlinggerät übertragen werden. Hierdurch wird erreicht, daß das erste Gestell der Spritzgießmaschine Schwingungen ausführen kann, die sich nicht oder zumindest nur in verringertem Umfang auf das Handlinggerät auswirken.

Es versteht sich, daß der Bewegungshub, den das Gestell der Kunststoff-Spritzgießmaschine relativ zu dem Gestell des Handlinggerätes ausführen kann, aufgrund der nach wie vor bestehenden Verkopplung begrenzt ist. Dementsprechend besitzt die erfindungsgemäße Spritzgießanlage gegenüber einer vollkommenen Trennung der Gestelle der Spritzgießmaschine und des Handlinggerätes den Vorteil, daß sich die relative Position der beiden zueinander nur im Rahmen dieses Bewegungshubes verändern kann. Hierdurch ist die maximal mögliche Veränderung der relativen Position zwischen den Gestellen der Spritzgießmaschine und des Handlinggerätes bekannt und diese kann so bei der Steuerung der Ein- und Ausfahrbewegung des Greifwerkzeuges des Handlinggerätes zwischen die Werkzeughälften der Spritzgießmaschine berücksichtigt werden.

Das erfindungsgemäße Verfahren besitzt den Vorteil, daß trotz der nunmehr möglichen relativen Verschiebung der beiden Gestelle zueinander ein exaktes Ein- und Ausfahren des Greifwerkzeugs des Handlinggerätes zwischen die Werkzeughälften der Spritzgießmaschine gewährleistet ist. Dies kann beispielsweise dadurch geschehen, daß die relative Position zwischen den beiden Gestellen vor Beginn der Einfahrbewegung auf einen vorgegebenen Wert korrigiert wird. Alternativ oder in Ergänzung dazu kann die jeweils aktuelle relative Position zwischen den beiden Gestellen auch in der Softwaresteuerung des Handlinggerätes als Parameter berücksichtigt werden.

Insgesamt wird durch die erfindungsgemäße Maßnahme erreicht, daß die beiden Gestelle der Spritzgießmaschine und des Handlinggerätes von einander entkoppelt sind, während gleichzeitig ihre relative Position zueinander erhalten bleibt. Hierdurch wird die eingangs gestellte Aufgabe vollständig gelöst.

In einer Ausgestaltung der erfindungsgemäßen Spritzgießanlage verläuft die erste Achse parallel zur ersten Bewegungsrichtung.

Diese Maßnahme besitzt den Vorteil, daß hierdurch der Bewegungsfreiraum des ersten Gestells in bezug auf das zweite Gestell exakt derjenigen Richtung angepaßt ist, in der das erste Gestell aufgrund der Bewegungen des bzw. der Werkzeughälften in Schwingungen versetzt wird. Hierdurch wird eine Übertragung von Schwingungen in optimaler Weise reduziert. Je geringer die Parallelität zwischen der ersten Achse und der ersten Bewegungsrichtung ist, desto größer ist der Anteil der Schwingungen, der auf das Gestell des Handlinggerätes übertragen wird.

In einer weiteren Ausgestaltung der Erfindung sind das erste Gestell und das zweite Gestell entlang einer zweiten Achse starr miteinander verkoppelt.

Diese Maßnahme besitzt den Vorteil, daß die relative Position der beiden Gestelle zueinander soweit wie möglich fixiert ist, ohne jedoch dadurch die Nachteile des Standes der Technik in Kauf zu nehmen. Die Fixierung der relativen Position der beiden Gestelle zueinander ist vorteilhaft, weil hierdurch ansonsten notwendige Toleranzen bei der Steuerung des Bewegungsablaufs des Handlinggerätes vermieden oder zumindest reduziert werden können. Die Fixierung ermöglicht somit eine exaktere und damit auch schnellere Steuerung des Handlinggerätes.

In einer weiteren Ausgestaltung der zuvor genannten Maßnahme verläuft die zweite Achse transversal zur ersten Achse.

Diese Maßnahme besitzt den Vorteil, daß die erste Achse, entlang der das Gestell der Spritzgießmaschine Schwingungen ausführen kann, soweit wie möglich von der zweiten Achse, entlang der die beiden Gestelle starr miteinander verbunden sind, entkoppelt ist. Hierdurch werden die beiden einander entgegengesetzten Ziele, nämlich einerseits Schwingungen zu ermöglichen und andererseits die relative Position der beiden Gestelle zueinander zu fixieren, in optimaler Weise erreicht.

In einer weiteren Ausgestaltung der zuvor genannten Maßnahme weist das Handlinggerät ein Greifwerkzeug auf, das relativ zum zweiten Gestell entlang einer zweiten Bewegungsrichtung bewegbar ist, die vorzugsweise parallel zur zweiten Achse verläuft.

Diese Maßnahme besitzt den Vorteil, daß hierdurch nicht nur die zweite Achse optimal von der ersten Achse entkoppelt ist, sondern weiterhin die zweite Achse ebenfalls optimal an die Bewegungsrichtung des Handlinggerätes mit seinem Greifwerkzeug angepaßt ist. Anschaulich gesprochen ist durch diese vorteilhafte Anordnung der Achsen gewährleistet, daß die starre Verkopplung der beiden Gestelle genau in der Richtung wirkt, die für die Steuerung der Einfahrbewegung des Greifwerkzeugs in die Spritzgießmaschine und zum Entnehmen bzw. Einlegen von Werkstücken und/oder Zubehörteilen in die Werkzeughälften der Spritzgießmaschine die größte Bedeutung besitzt.

In einer weiteren Ausgestaltung der Erfindung weist zumindest eines der beiden Gestelle Kopplungsmittel auf, mit denen das erste Gestell und das zweite Gestell lösbar aneinander fixierbar sind.

Diese Maßnahme besitzt den Vorteil, daß hierdurch die Verkopplung der beiden Gestelle zeitweise verstärkt werden kann, um beispielsweise das Greifwerkzeug des Handlinggerätes mit sehr geringen Toleranzen in die Spritzgießmaschine hineinzusteuern. Sobald dieser Bewegungsablauf jedoch beendet ist, kann die Verkopplung auf das erfindungsgemäße Maß reduziert werden, d.h. dem ersten Gestell wird der erfindungsgemäße Bewegungsspielraum ermöglicht. Die Maßnahme besitzt somit den Vorteil, daß der Grad der Verkopplung zwischen den beiden Gestellen unterschiedlichen Anforderungen, die zu unterschiedlichen Zeiten im Arbeitsbetrieb der Spritzgießanlage vorliegen, optimal angepaßt werden kann.

In einer Ausgestaltung des erfindungsgemäßen Verfahrens wird die relative Position der beiden Gestelle vor dem Einfahren des Greifwerkzeugs mit Hilfe der Kopplungsmittel fixiert und nach dem Einfahren des Greifwerkzeugs wieder gelöst.

Diese Maßnahme besitzt den Vorteil, daß die beiden Gestelle somit in der kritischsten Phase, in der das Greifwerkzeug in den Bereich der Spritzgießmaschine einfährt, starr miteinander gekoppelt sind, während die Kopplung außerhalb dieser kritischen Phase im Sinne der Erfindung aufgehoben oder zumindest reduziert ist. Anschaulich gesprochen wird der Grad der Kopplung zwischen den beiden Gestellen somit jeweils dann verstärkt, wenn die Vorteile einer starren Verkopplung gegenüber den Vorteilen einer beweglichen Verkopplung überwiegen. Im umgekehrten Fall wird der Grad der Verkopplung reduziert, d.h. eine relative Bewegung der beiden Gestelle zueinander wird ermöglicht, wenn die hiermit verbundenen Vorteile der Verringerung von Schwingungsübertragungen überwiegen. Die genannte Maßnahme besitzt somit den Vorteil, daß sie den wechselnden Anforderungen im Arbeitsbetrieb der Spritzgießanlage jeweils optimal angepaßt ist.

In einer weiteren Ausgestaltung der Spritzgießanlage weist zumindest eines der beiden Gestelle Verstellmittel auf, mit denen die relative Position der beiden Gestelle zueinander einstellbar ist.

Diese Maßnahme besitzt den Vorteil, daß die relative Position der beiden Gestelle zueinander, die sich aufgrund der möglichen relativen Bewegung verändern kann, bei Bedarf auf denjenigen Wert einstellbar ist, der für eine optimale Steuerung der Bewegungsabläufe benötigt wird. Abweichungen der relativen Position der Gestelle von ihrer optimalen Position können somit korrigiert werden.

In einer Ausgestaltung des erfindungsgemäßen Verfahrens wird die relative Position der beiden Gestelle vor jedem Einfahren des Greifwerkzeugs auf einen vorbestimmten Wert eingestellt und das Greifwerkzeug wird in Abhängigkeit von dem vorbestimmten Wert gesteuert.

Diese Maßnahme besitzt den Vorteil, daß die Steuerung des Greifwerkzeugs von definierten Verhältnissen ausgehen kann und auf diese definierten Verhältnisse hin optimiert werden kann. Etwaige Toleranzen, die ansonsten bei der Steuerung der Bewegungsabläufe berücksichtigt werden müssen, können somit auf ein Minimum reduziert werden.

In einer weiteren Ausgestaltung der Erfindung weist die Spritzgießanlage Meßmittel auf, mit denen die relative Position der beiden Gestelle zueinander bestimmbar ist.

In einer Ausgestaltung des erfindungsgemäßen Verfahrens wird die relative Position der beiden Gestelle vor jedem Einfahren des Greifwerkzeugs mit Meßmitteln bestimmt.

Diese Maßnahmen bieten in Kombination mit den zuvor genannten Maßnahmen den Vorteil, daß eine Korrektur der relativen Position der beiden Gestelle zueinander nur jeweils dann erfolgen muß, wenn diese tatsächlich auch notwendig ist. Unnötige Korrekturvorgänge und die damit verbundenen Zeitverluste können auf diese Weise vermieden werden. Hierdurch wird die Arbeitsgeschwindigkeit der gesamten Spritzgießanlage insgesamt erhöht.

In einer weiteren Ausgestaltung der Erfindung weist die Spritzgießanlage Steuermittel zum Steuern der Ein- und Ausfahrbewegung des Greifwerkzeugs auf, denen Signale zugeführt sind, die die relative Position der beiden Gestelle zueinander repräsentieren.

Diese Maßnahme besitzt den Vorteil, daß die Steuerung der Einund Ausfahrbewegung des Greifwerkzeugs somit unter Berücksichtigung der jeweils aktuellen relativen Position der beiden Gestelle zueinander erfolgen kann. Dies ist insofern vorteilhaft, da die Ein- und Ausfahrbewegung des Greifwerkzeugs zwischen die Werkzeughälften der Spritzgießmaschine sowohl im Hinblick auf hierbei mögliche Kollisionen als auch im Hinblick auf die hier benötigte Zeit, die auch für die Zykluszeit der gesamten Spritzgießanlage von Bedeutung ist, eine kritische und sensible Bewegung ist.

In einer weiteren Ausgestaltung der zuvor genannten Maßnahme des erfindungsgemäßen Verfahrens wird das Greifwerkzeug in Abhängigkeit von der bestimmten relativen Position gesteuert.

Diese Maßnahme besitzt den Vorteil, daß hierdurch auf eine Korrektur der jeweils aktuellen relativen Position der beiden Gestelle zueinander mit Hilfe von Verstellmitteln verzichtet werden kann. Vielmehr wird die bestimmte relative Position der beiden Gestelle zueinander als Meßwert oder Parameter in der Softwaresteuerung des Greifwerkzeugs berücksichtigt. Durch den Verzicht auf die Verstellmittel und die mit ihnen verbunden Korrekturvorgänge wird zum einen der Aufwand bei der Konstruktion und Herstellung einer erfindungsgemäßen Spritzgießanlage vermindert und andererseits wird die Zykluszeit der Spritzgießanlage im Arbeitsbetrieb reduziert.

In einer weiteren Ausgestaltung der Erfindung weisen die Verbindungselemente reibungsverringernde Mittel, vorzugsweise Gleitkörper und besonders bevorzugt lineare Wälzlager auf.

Diese Maßnahme besitzt den Vorteil, daß hierdurch die relative Bewegung zwischen den beiden Gestellen erleichtert wird, wodurch eine Übertragung von Schwingungen noch weiter verringert ist.

Lineare Wälzlager besitzen den Vorteil, daß sie nur einen Freiheitsgrad besitzen und somit eine Bewegung nur in einer Richtung ermöglichen. Sie sind damit für die vorliegende Erfindung besonders gut geeignet.

In einer weiteren Ausgestaltung der Erfindung liegt ein Bewegungshub des ersten Gestells in bezug auf das zweite Gestell im Bereich von 0,5 mm bis 10 mm, bevorzugt im Bereich von 1 mm bis 5 mm.

Diese Maßnahme besitzt den Vorteil, daß der Bewegungshub des ersten Gestells in bezug auf das zweite Gestell genau in der Größenordnung bemessen ist, die bei derzeit bekannten Spritzgießanlagen benötigt werden, um eine Übertragung von Schwingungen auf das Gestell des Handlinggerätes zu unterbinden. Eine Vergrößerung des möglichen Bewegungshubes würde insofern unnötigerweise den Aufwand vergrößern, der insbesondere dann entsteht, wenn die Verkopplung der beiden Gestelle lösbar fixierbar ist. Darüber hinaus kann eine Vergrößerung des zulässigen Bewegungshubes dazu führen, daß die beiden Gestelle sich im Arbeitsbetrieb derart weit gegeneinander verschieben, daß ein sicherer Betrieb der Spritzgießanlage nicht mehr gewährleistet ist.

Es versteht sich, daß die zuvor genannten Merkmale der Erfindung sowie die nachfolgend noch zu erläuternden Merkmale nicht nur in ihrer jeweiligen Kombination sondern auch in Alleinstellung sowie in ihren weiteren Kombinationen verwendet werden können, ohne den Rahmen der vorliegenden Erfindung zu verlassen.

Nachfolgend werden Ausführungsbeispiele der Erfindung anhand einer Zeichnung erläutert. Es zeigen:
- Fig. 1: eine schematische perspektivische Darstellung einer erfindungsgemäßen Kunststoff-Spritzgießanlage,
- Fig. 2: eine Teilansicht der Spritzgießanlage aus Fig. 1 in Blickrichtung der z-Achse,
- Fig. 3: eine Detailansicht einer erfindungsgemäßen Verkopplung der beiden Gestelle der Spritzgießanlage entlang der Ansichtslinie III-III in Fig. 2 und
- Fig. 4: eine Seitenansicht eines weiteren Ausführungsbeispiels einer erfindungsgemäßen Spritzgießanlage in Blickrichtung der z-Achse.

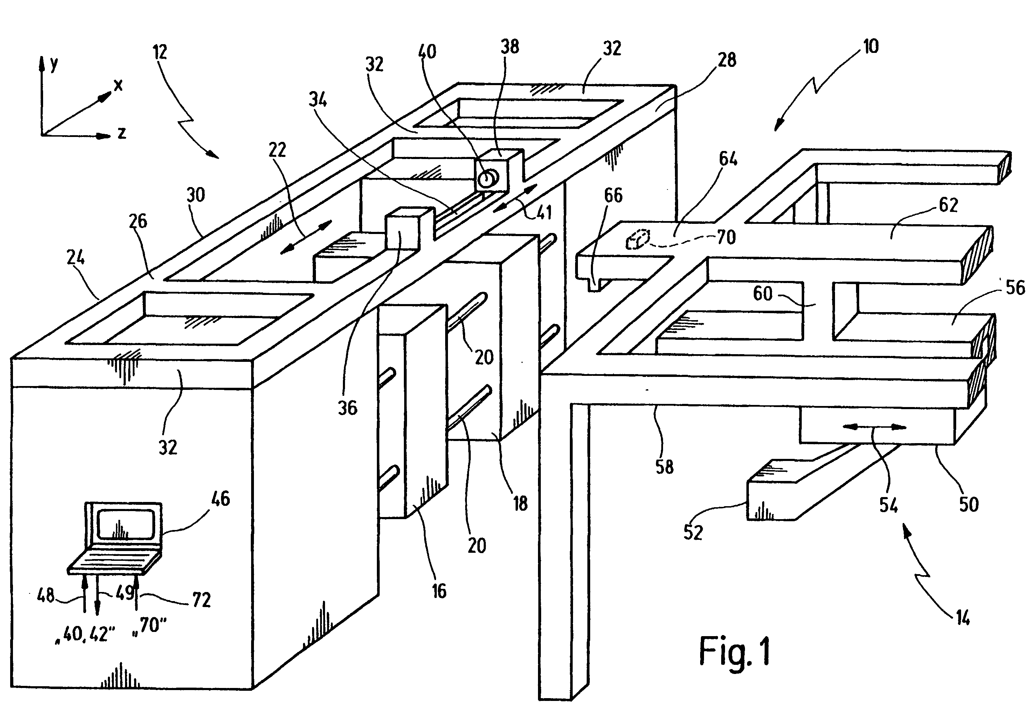

In Fig. 1 ist eine erfindungsgemäße Kunststoff-Spritzgießanlage in ihrer Gesamtheit mit der Bezugsziffer 10 bezeichnet.

Die Spritzgießanlage 10 umfaßt eine Spritzgießmaschine 12 sowie ein Handlinggerät 14. Die Spritzgießmaschine 12 weist zwei Werkzeughälften 16 und 18 auf, die auf Führungsholmen 20 gelagert sind. Die Werkzeughälfte 18 ist im vorliegenden Ausführungsbeispiel in Richtung eines Pfeils 22 bewegbar, während die Werkzeughälfte 16 feststehend ist.

Alternative Ausführungsbeispiele der Erfindung können jedoch prinzipiell auch Werkzeughälften 16, 18 aufweisen, die beide in Richtung des Pfeils 22 bewegbar sind. Darüber hinaus umfaßt die Erfindung auch Ausführungsbeispiele, bei denen mehr als zwei Werkzeughälften 16, 18 vorhanden sind. Dies betrifft gleichermaßen Spritzgießmaschinen 12 mit sogenannten Etagenwerkzeugen. Generell treten die Vorteile der Erfindung um so stärker zu Tage, je größer die bewegte Masse der Werkzeughälften 16, 18 ist, da sich diese Größe unmittelbar auf die Stärke der Bewegungsimpulse und damit die Schwingungen der Spritzgießmaschine auswirkt.

Die Werkzeughälften 16, 18 der Spritzgießmaschine 12 sind in einem Gehäuse oder Gestell 24 eingebaut, das in dieser Darstellung einen Rahmen 26 aufweist. Der Rahmen 26 besteht hier aus einem vorderen Längsträger 28, einem hinteren Längsträger 30 sowie mehreren Querträgern 32. Es sei jedoch angemerkt, daß diese Ausführung vor allem der übersichtlichen Darstellung wegen gewählt ist. Alternativ zu dieser Variante sitzt die Spritzgießmaschine 12 häufig in einem hier nicht gezeigten Maschinenbett, während das Gestell 24 auch die Führungsholme 20 umfaßt.

Der vordere Längsträger 28 weist in etwa mittig eine Längsnut 34 auf. Beidseitig von der Längsnut 34 ist jeweils ein Anschlag 36 und 38 angeordnet, durch den die Bewegung eines Körpers innerhalb der Längsnut in Längsrichtung beidseitig begrenzt wird.

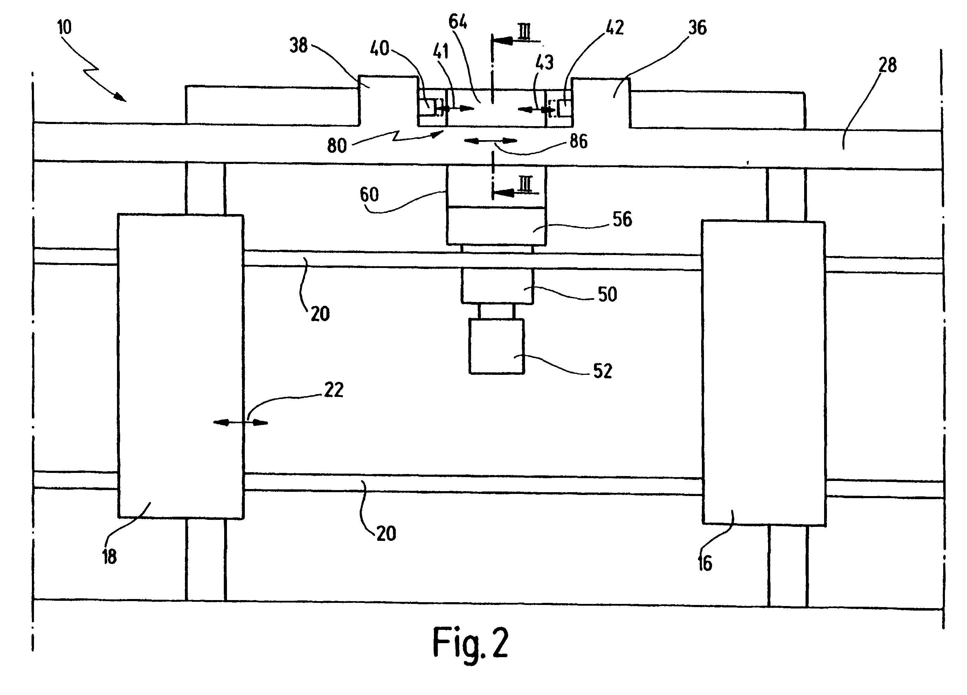

Wie in der perspektivischen Darstellung der Fig. 1 zu erkennen ist, ist in dem Anschlag 38 ein Kolben 40 angeordnet, der in Richtung eines Pfeils 41 bewegbar ist. Einen entsprechenden Kolben 42, der in Richtung eines Pfeils 43 bewegbar ist, beherbergt auch der Anschlag 36, wie in der nachfolgend erläuterten Darstellung der Fig. 2 zu erkennen ist.

Mit dem Bezugszeichen 46 ist eine Steuereinheit bezeichnet, der zur Steuerung der Bewegungsabläufe der gesamten Spritzgießanlage unter anderem Signale 48 zugeführt sind, die für die Position der Kolben 40, 42 in bezug auf die Anschläge 36, 38 repräsentativ sind. Umgekehrt wird die Position der Kolben 40, 42 in bezug auf die Anschläge 36, 38 von der Steuereinheit 46 über Signale 49 eingestellt.

Das Handlinggerät 14 weist einen Antrieb 50 auf, der im vorliegenden Ausführungsbeispiel ein Linearmotor ist. Derartige Linearmotoren werden bei zukünftigen Spritzgießanlagen zunehmend eingesetzt, da sie eine sehr exakte und sehr schnelle Bewegung der mit ihnen verbundenen Werkzeuge ermöglichen. Die Erfindung ist jedoch nicht auf dieses Ausführungsbeispiel beschränkt und in alternativen Ausführungsformen ist der Antrieb 50 des Handlinggerätes 14 ein elektrisch-rotatorischer Antrieb oder ein pneumatischer Antrieb.

Das Handlinggerät 14 umfaßt des weiteren ein Greifwerkzeug 52, das mit Hilfe des Antriebes 50 in Richtung des Pfeils 54 an einem Führungsprofil 56 bewegbar ist. Das Führungsprofil 56 ist im vorliegenden Ausführungsbeispiel ein Hohlprofil, in dem der Antrieb 50 geführt ist. Das Hohlprofil 56 gehört zu einem Gestell 58. Es ist über einen oder mehrere Tragarme 60 an einem oberen Querträger 62 befestigt.

Der obere Querträger 62 weist eine Verlängerung 64 auf, an der ein nach unten gerichteter Zapfen 66 angeordnet ist.

In der gezeigten Darstellung der Fig. 1 sind das Gestell 24 der Spritzgießmaschine 12 und das Gestell 58 des Handlinggerätes 14 aus Gründen der Übersichtlichkeit nicht miteinander verkoppelt dargestellt. Die Verkopplung erfolgt jedoch bei der Montage der Spritzgießanlage 10, indem der Zapfen 66 an der Verlängerung 64 des Gestells 58 in die Längsnut 34 im Querträger 32 des Gestells 24 eingeschoben wird. Dieses Ausführungsbeispiel einer erfindungsgemäßen Verkopplung der beiden Gestelle 24 und 58 wird anhand der nachfolgenden Figuren noch ausführlicher erläutert.

In einer optionalen Weiterbildung des hier gezeigten Ausführungsbeispiels weist die Spritzgießanlage 10 ein Meßmittel 70 auf, das nachfolgend als Sensor bezeichnet ist. Der Sensor 70 ist vorzugsweise ein Entfernungssensor, beispielsweise ein Infrarot-Entfernungssensor, der an einem der beiden Gestelle 24, 58 derartig angeordnet ist, daß mit seiner Hilfe die aktuelle relative Position der beiden Gestelle 24, 58 zueinander bestimmbar ist. Die Meßsignale 72 des Sensors 70 sind ebenfalls der Steuereinheit 46 zugeführt.

Zur weiteren Erläuterung insbesondere des erfindungsgemäßen Verfahrens ist außerdem in der Darstellung der Fig. 1 ein Koordinatensystem mit einer x-Achse, einer y-Achse sowie einer z-Achse eingezeichnet. Sofern im folgenden einzelne Bewegungsrichtungen angegeben werden, beziehen sich diese auf dieses Koordinatensystem.

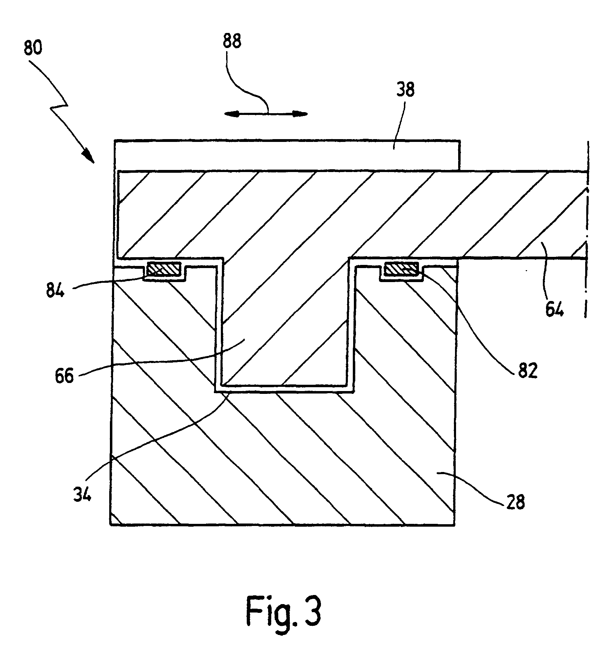

In der Seitenteilansicht der Fig. 2 ist die Kunststoff-Spritzgießanlage 10 in betriebsfertig montiertem Zustand dargestellt. Dabei sind die beiden Gestelle 24 und 58 der Spritzgießmaschine 12 und des Handlinggerätes 14 erfindungsgemäß miteinander verkoppelt. Der Blickwinkel der Fig. 2 ist derjenige, der sich ergibt, wenn man auf der dem Handlinggerät 14 abgewandten Seite der Spritzgießmaschine 12 in Richtung z-Achse schaut. Der Aufbau der erfindungsgemäßen Verkopplung 80 wird darüber hinaus anhand der Querschnittsansicht III-III in Fig. 3 erkennbar, auf die nachfolgend hier ebenfalls Bezug genommen ist.

Die Verkopplung 80 erfolgt im vorliegenden Ausführungsbeispiel dadurch, daß der Zapfen 66 der Verlängerung 64 des Gestells 58 in die Längsnut 34 des Gestells 24 eingeführt ist. Vorzugsweise liegt die Verlängerung 64 dabei auf Gleitkörpern 82, 84 auf, durch die die Reibung zwischen der Verlängerung 64 und dem vorderen Längsträger 28 bei einer Bewegung in Richtung des Pfeils 86 verringert wird. Die Gleitkörper sind in diesem Fall lineare Wälzlager, die nur einen Freiheitsgrad besitzen, und zwar parallel zur x-Achse. Derartige Wälzlager sind im Stand der Technik bekannt und werden beisp. von der Firma THK vertrieben.

Wie anhand der Darstellung in Fig. 2 erkennbar ist, sind die Kolben 40, 42 in der Lage, eine erste Position einzunehmen, in der zwischen ihnen und der Verlängerung 64 jeweils ein Zwischenraum verbleibt. Dementsprechend ist die Verlängerung 64 und damit das Gestell 58 des Handlinggerätes 14 in bezug auf das Gestell 24 der Spritzgießmaschine 12 in Richtung des Pfeils 86 beweglich. Umgekehrt ist das Gestell 24 der Spritzgießmaschine 12 in diesem Zustand in Richtung des Pfeil 86 beweglich in bezug auf das Gestell 58 des Handlinggerätes 14.

In einem zweiten Betriebszustand, der in Fig. 2 gestrichelt dargestellt ist, sind die Kolben 40, 42 soweit aus den Anschlägen 36, 38 in Richtung der Pfeile 41, 43 herausgefahren, daß sie beidseitig an der Verlängerung 64 anliegen. Die Kolben 40, 42 sind dabei vorzugsweise elektrisch betätigt. Wenn der Anpreßdruck der Kolben 40, 42 gegenüber der Verlängerung 64 genügend hoch eingestellt ist, ist eine Relativbewegung der Gestelle 24, 58 zueinander in Richtung des Pfeils 86 verhindert.

Wie anhand der konstruktiven Ausgestaltung der Verkopplung 80 in Fig. 3 erkennbar ist, ist eine Relativbewegung der Verlängerung 64 gegenüber dem vorderen Längsträger 28 der Spritzgießmaschine 12 in Richtung des Pfeils 88 generell ausgeschlossen.

Insgesamt ermöglicht die Verkopplung 80 somit eine einstellbar große Beweglichkeit der beiden Gestelle 24, 58 relativ zueinander in Richtung des Pfeils 86, während die Verkopplung 80 in Richtung des Pfeils 88 starr ist. Solange die Relativbewegung der beiden Gestelle 24, 58 zueinander in Richtung des Pfeils 86 möglich ist, wird eine Übertragung von Schwingungen des Gestells 24, die aus der Bewegung der Werkzeughälften 16, 18 in Richtung des Pfeils 22 resultiert, verhindert oder zumindest verringert. Demgegenüber sind die beiden Gestelle 24, 58 in demjenigen Zustand, in dem die Kolben 40, 42 mit höchstem Anpreßdruck an der Verlängerung 64 anliegen, auch in Richtung des Pfeils 86 starr miteinander verkoppelt.

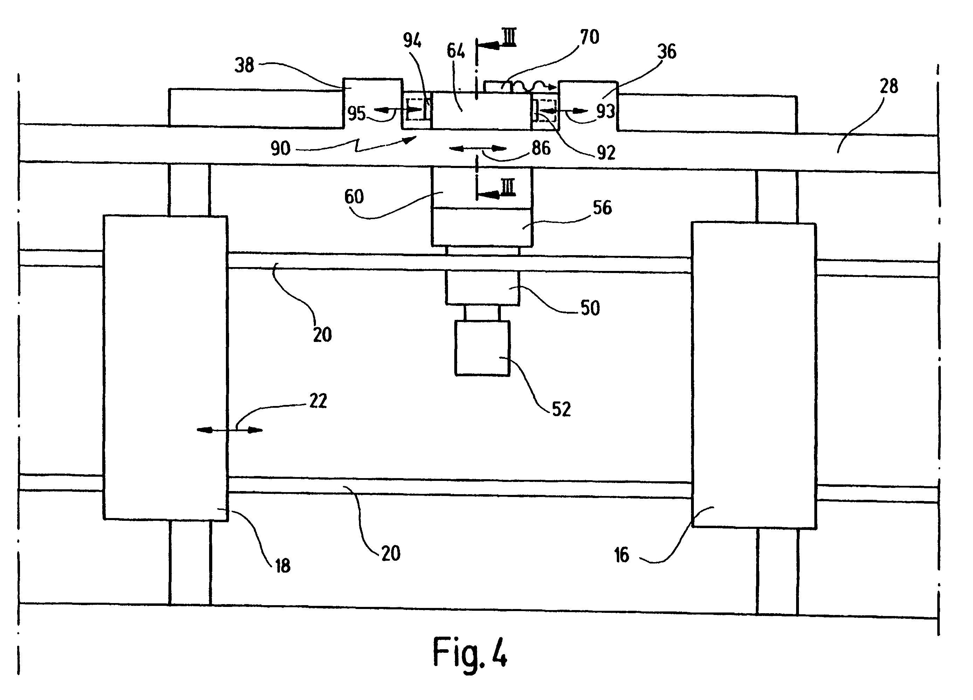

Das Ausführungsbeispiel gemäß Fig. 4 unterscheidet sich von dem vorhergehenden Ausführungsbeispiel nur anhand der Verkopplung 90. Bei dieser sind im Unterschied zum vorhergehenden Ausführungsbeispiel ein Kolben 92, der in Richtung des Pfeils 93 bewegbar ist, sowie ein Kolben 94, der in Richtung des Pfeils 95 bewegbar ist, in der Verlängerung 64 des Gestells 58 des Handlinggerätes 14 angeordnet. Die Funktion der Kolben 92 und 94 entspricht jedoch derjenigen der Kolben 40 und 42 des vorhergehenden Ausführungsbeispiels, d.h. sie dienen dazu, im ausgefahrenen Zustand eine Bewegung der Gestelle 24 und 58 relativ zueinander in Richtung des Pfeils 86 zu unterbinden.

Des weiteren ist in dem Ausführungsbeispiel der Fig. 4 der Sensor 70 enthalten, mit dem die jeweils aktuelle relative Position der beiden Gestelle 24 und 58 zueinander bestimmbar ist.

In einer weiteren, hier nicht dargestellten Variante weist die Verkopplung 80 bzw. 90 anstelle der Kolben 40, 42 bzw. 92, 94 konische oder zylindrische Indexstifte auf, die in entsprechende Bohrungen auf der gegenüberliegenden Seite ein- bzw. ausgefahren werden.

In einer weiteren Variante sind die genannten Indexstifte nicht parallel zur x-Achse, sondern parallel zur z-Achse bewegbar. Diese Variante besitzt den zusätzlichen Vorteil, daß die relative Position der beiden Gestelle 24, 58 der Spritzgießmaschine 12 und des Handlinggerätes 14 beim Einfahren der Indexstifte in die ihnen gegenüberliegenden Bohrungen justiert wird.

Für die Steuerung der erfindungsgemäßen Spritzgießanlage 10 ergeben sich nun verschiedene Möglichkeiten.

Ein bevorzugtes Verfahren besteht darin, daß die Verkopplung der beiden Gestelle 24 und 58 in Richtung der x-Achse, d.h. in Bewegungsrichtung des Pfeils 86 so lange gelöst bleibt, bis das Greifwerkzeug 52 des Handlinggerätes 14 zum Entnehmen oder Einlegen eines Werkstücks und/oder eines Zubehörteils zwischen die Werkzeughälften 16, 18 der Spritzgießmaschine 12 eingefahren werden soll. Erst unmittelbar vor Beginn dieser Einfahrbewegung oder sogar erst vor dem tatsächlichen Eintritt des Greifwerkzeugs 52 in den Bereich zwischen den Werkzeughälften 16, 18 werden die Kolben 40, 42 bzw. 92, 94 von der Steuereinheit 46 gegen die Verlängerung 64 bzw. gegen die Anschläge 36, 38 gepreßt. In einem bevorzugten Ausführungsbeispiel sind die Anschläge 36, 38 sowie die Abmessungen der Verlängerung 64 so gewählt, daß das Gestell 58 bei einem ausreichenden Anpreßdruck der Kolben 40, 42 bzw. 92, 94 automatisch in bezug auf das Gestell 24 in eine vorbestimmte Position gebracht wird. Diese vorbestimmte Position entspricht dann derjenigen Position, die für die Steuerung des Bewegungsablaufes des Greifwerkzeugs 52 zugrunde gelegt wird. Gleiches gilt bei der Verwendung von Indexstiften anstelle der Kolben 40, 42 bzw. 92, 94.

Während des Einfahrens des Greifwerkzeugs 52 zwischen die Werkzeughälften 16, 18 ist somit eine starre Verkopplung der beiden Gestelle 24, 58 gewährleistet. Dies ist insofern von Bedeutung, als daß die Einfahrbewegung des Greifwerkzeugs 52 zur Vermeidung von Kollisionen und zur Reduzierung der Zykluszeiten der Spritzgießanlage 10 mit hoher Präzision und ausgesprochen schnell erfolgen muß.

Sobald eine Freigabe der Verkopplung 80 bzw. 90 in Richtung der x-Achse möglich ist, spätestens also nachdem das Greifwerkzeug 52 wieder aus dem Bereich zwischen den Werkzeughälften 16, 18 heraus gefahren ist, wird die Verkopplung 80 bzw. 90 gelöst, indem die Steuereinheit 46 den Anpreßdruck der Kolben 40, 42 bzw. 92, 94 verringert. Hierdurch werden die Vibrationen des Gestells 24 der Spritzgießmaschine 12 in Richtung der x-Achse nicht mehr auf das Gestell 58 des Handlinggerätes 14 übertragen.

In einem alternativen Ausführungsbeispiel des erfindungsgemäßen Verfahrens werden die Kolben 40, 42 bzw. 92, 94 von der Steuereinheit 46 mit unterschiedlichem Anpreßdruck beaufschlagt, um so die relative Position zwischen den Gestellen 24 und 58 auf einen anderen vorbestimmten Wert als denjenigen, der sich bei einem symmetrischen Anpreßdruck ergibt, einzustellen. Hierdurch ist es beispielsweise möglich, langfristige Veränderungen der relativen Position der beiden Gestelle 24 und 58, die sich im Laufe des Arbeitsbetriebs einstellen können, auszugleichen.

Bei dem Ausführungsbeispiel der Fig. 4 bietet sich, wie bereits erläutert, die Möglichkeit, die aktuelle relative Position der beiden Gestelle 24 und 58 zueinander mit Hilfe des Sensors 70 zu bestimmen. Dies kann einerseits dazu verwendet werden, die relative Position zwischen den beiden Gestellen 24 und 58 auf den vorbestimmten Wert einzustellen und somit zu korrigieren.

Bei einem ebenfalls bevorzugten, alternativen Ausführungsbeispiel des erfindungsgemäßen Verfahrens wird jedoch die aktuelle relative Position der beiden Gestelle 24 und 58 zueinander bestimmt und sodann als Meßwert der Steuereinheit 46 zur Verfügung gestellt. Diese steuert sodann das Greifwerkzeug 52 des Handlinggerätes 14 in Abhängigkeit dieses bestimmten Meßwertes, ohne die relative Position der beiden Gestelle 24 und 58 zueinander auf einen vorbestimmten Wert zu korrigieren. Dies ist insbesondere dann möglich, wenn das Greifwerkzeug 52 zumindest einen gewissen Bewegungsspielraum in Richtung der x-Achse besitzt, so daß es einer Veränderung der relativen Position der beiden Gestelle 24 und 58 nachgeführt werden kann. Selbstverständlich ist es auch bei diesem Verfahren möglich, die Verkopplung 90 vor Beginn der Einfahrbewegung des Greifwerkzeugs 52 in Richtung des Pfeils 86 zu fixieren.

In beiden zuvor beschriebenen Ausführungsbeispielen beträgt der mögliche Bewegungshub der beiden Gestelle 24 und 58 relativ zueinander in etwa 10 mm. Der Bewegungshub kann jedoch, wie leicht einzusehen ist, durch eine Vorspannung der Kolben 40, 42 bzw. 92, 94 verringert werden.

## Patentansprüche

1. Kunststoff-Spritzgießanlage, mit einer Kunststoff-Spritzgießmaschine (12) und mit einem Handlinggerät (14) zum Zuführen und/oder Entnehmen von Werkstücken und/oder Zubehörteilen in die bzw. aus der Spritzgießmaschine (12), wobei die Spritzgießmaschine (12) ein erstes Gestell (24) und zumindest eine bewegbare Werkzeughälfte (16, 18) aufweist, die relativ zum ersten Gestell (58) entlang einer ersten Bewegungsrichtung (22) bewegbar ist, wobei ferner das Handlinggerät (14) ein zweites Gestell (58) aufweist und wobei die Gestelle (24, 58) über Verbindungselemente (34, 66; 80; 90) miteinander verkoppelt sind, **dadurch gekennzeichnet, daß** die beiden Gestelle (24, 58) entlang mindestens einer ersten Achse (x) relativ zueinander beweglich verkoppelt sind (86).

2. Spritzgießanlage nach Anspruch 1, **dadurch gekennzeichnet, daß** die erste Achse (x) parallel zur ersten Bewegungsrichtung (22) verläuft.

3. Spritzgießanlage nach Anspruch 2, **dadurch gekennzeichnet, daß** das erste Gestell (24) und das zweite Gestell (58) entlang einer zweiten Achse (z) starr miteinander verkoppelt sind.

4. Spritzgießanlage nach Anspruch 3, **dadurch gekennzeichnet, daß** die zweite Achse (z) transversal zur ersten Achse (x) verläuft.

5. Spritzgießanlage nach Anspruch 3 oder 4, **dadurch gekennzeichnet, daß** das Handlinggerät (14) ein Greifwerkzeug (52) aufweist, das relativ zum zweiten Gestell (58) entlang einer zweiten Bewegungsrichtung (54, 88) bewegbar ist, die vorzugsweise parallel zur zweiten Achse (z) verläuft.

6. Spritzgießanlage nach einem der Ansprüche 1 bis 5, **dadurch gekennzeichnet, daß** zumindest eines der beiden Gestelle (24, 58) Kopplungsmittel (36, 38, 40, 42; 36, 38, 90, 92) aufweist, mit denen das erste Gestell (24) und das zweite Gestell (58) lösbar aneinander fixierbar sind.

7. Spritzgießanlage nach einem der Ansprüche 1 bis 6, **dadurch gekennzeichnet, daß** zumindest eines der beiden Gestelle (24, 58) Verstellmittel (36, 38, 40, 42; 36, 38, 90, 92) aufweist, mit denen die relative Position der beiden Gestelle (24, 58) zueinander einstellbar ist.

8. Spritzgießanlage nach einem der Ansprüche 1 bis 7, **dadurch gekennzeichnet, daß** sie Meßmittel (70) aufweist, mit denen die relative Position der beiden Gestelle (24, 58) zueinander bestimmbar ist.

9. Spritzgießanlage nach einem der Ansprüche 1 bis 8, **dadurch gekennzeichnet, daß** sie Steuermittel (46) zum Steuern der Ein- und Ausfahrbewegung des Greifwerkzeugs (52) aufweist, denen Signale (48, 72) zugeführt sind, die die relative Position der beiden Gestelle (24, 58) zueinander repräsentieren.

10. Spritzgießanlage nach einem der Ansprüche 1 bis 9, **dadurch gekennzeichnet, daß** die Verbindungselemente (34, 66; 80; 90) reibungsverringernde Mittel (82, 84), vorzugsweise Gleitkörper (82, 84) und besonders bevorzugt lineare Wälzlager, aufweisen.

11. Spritzgießanlage nach einem der Ansprüche 1 bis 10, **dadurch gekennzeichnet, daß** ein Bewegungshub des ersten Gestells (24) in bezug auf das zweite Gestell (58) im Bereich von 0,5 bis 10 mm, bevorzugt im Bereich von 1 bis 5 mm liegt.

12. Verfahren zum Spritzgießen von Kunststoffprodukten mit Hilfe einer Kunststoff-Spritzgießanlage (10), die eine Kunststoff-Spritzgießmaschine (12) und ein Handlinggerät (14) umfaßt, wobei die Spritzgießmaschine (12) ein erstes Gestell (24) und zumindest eine Werkzeughälfte (16, 18) aufweist, die relativ zum ersten Gestell (24) eine Öffnungs- und Schließbewegung entlang einer ersten Bewegungsrichtung (22) ausführt, wobei das Handlinggerät (14) ein mit dem ersten Gestell (24) verkoppeltes zweites Gestell (58) sowie ein Greifwerkzeug (52) aufweist und wobei das Greifwerkzeug (52) zum Zuführen und/oder Entnehmen von Werkstücken und/oder Zubehörteilen entlang einer zweiten Bewegungsrichtung (54) zwischen zumindest zwei Werkzeughälften (16, 18) der Spritzgießmaschine (12) ein- und ausgefahren wird, **dadurch gekennzeichnet, daß** das erste Gestell (24) und das zweite Gestell (58) relativ zueinander beweglich verkoppelt werden (86) und daß das Greifwerkzeug (52) beim Ein- und Ausfahren zwischen die Werkzeughälften (16, 18) in Abhängigkeit von einer relativen Position zwischen den beiden Gestellen (24, 58) gesteuert wird.

13. Verfahren nach Anspruch 12, **dadurch gekennzeichnet, daß** die relative Position der beiden Gestelle (24, 58) vor dem Einfahren des Greifwerkzeugs (52) mit Hilfe von Kopplungsmitteln (36, 38, 40, 42; 36, 38, 90, 92) fixiert und nach dem Einfahren des Greifwerkzeugs (52) wieder gelöst wird (41, 43; 93, 95).

14. Verfahren nach Anspruch 12 oder 13, **dadurch gekennzeichnet, daß** die relative Position der beiden Gestelle (24, 58) vor jedem Einfahren des Greifwerkzeugs (52) auf einen vorbestimmten Wert eingestellt wird (41, 43; 93, 95) und daß das Greifwerkzeug (52) in Abhängigkeit von dem vorbestimmten Wert gesteuert wird.

15. Verfahren nach Anspruch 12 oder 13, **dadurch gekennzeichnet, daß** die relative Position der beiden Gestelle (24, 58) vor jedem Einfahren des Greifwerkzeugs (52) mit Meßmitteln (70) bestimmt wird.

16. Verfahren nach Anspruch 15, **dadurch gekennzeichnet, daß** das Greifwerkzeug (52) in Abhängigkeit von der bestimmten relativen Position gesteuert wird.

## Claims

1. Injection molding unit for plastic material, comprising
an injection molding machine (12) for plastic material and a handling apparatus (14) for supplying and/or withdrawing pieces and/or fittings into the resp. from the. injection molding machine (12), the injection molding machine (12) having a first frame (24) and at least one movable tool half (16,18) which is movable relative to the first frame (58) along a first direction of movement (22), further the
handling apparatus (14) comprising a second frame (58) and the frames (24,58) being coupled to each other via connecting members (34, 66; 80, 90),
**characterized in that**
the two frames (24, 58) are coupled movably relative to each other (86) along at least one first axis (x).

2. Injection molding unit according to claim 1,
**characterized in that** the first axis (x) is extended in parallel to the first moving direction (22).

3. Injection molding unit according to claim 2,
**characterized in that** the first frame (24) and the second frame (58) are rigidly coupled to each other along a second axis (z).

4. Injection molding unit according to claim 3,
**characterized in that** the second axis (z) is extended transversally to the first axis (x).

5. Injection molding unit according to claim 3 or 4,
**characterized in that** the handling apparatus (14) has a gripping tool (52) which is movable relative to the second frame (58) along a second moving direction (54,88) which is extended preferably in parallel to the second axis (z).

6. Injection molding unit according to any of the claims I to 5,
**characterized in that** at least one of the two frames (24, 58) has coupling means (36, 38, 40, 42; 36, 38, 90, 92) with which the first frame (24) and the second frame (58) can be releasably fixed to each other.

7. Injection molding unit according to any of the claims I to 6,
**characterized in that** at least one of the two frames (24, 58) has adjustment means (36, 38, 40, 42; 36, 38, 90, 92) by means of which the relative position of the two frames (24, 58) to each other can be adjusted .

8. Injection molding unit according to any of the claims I to 7,
**characterized in that** it has measuring means (70) by means of which the relative position of the two frames (24, 58) to each other can be detected.

9. Injection molding apparatus according to any of the claims 1 to 8,
**characterized in that** it comprises control means (46) for controlling the moving in and moving out of the gripper tool (52), to which signals (48, 72) are fed which represent the relative position of the two frames (24, 58) to each other.

10. Injection molding unit according to any of the claims 1 to 9,
**characterized in that** the connecting elements (34, 66; 80; 90) are provided with friction-reducing means (82, 84), preferably sliding elements (82, 84) and especially preferably linear rolling bearings.

11. Injection molding unit according to any of the claims I to 10,
**characterized in that** a movement stroke of the first frame (24) with reference to the second frame (58) is within the range of 0,5 to 10 mm, preferably within the range of 1 to 5 mm.

12. Method for injection-molding of products of plastic material by means of an injection molding unit (10) for plastic material comprising an injection molding machine (12) for plastic material and a handling apparatus (14), the injection molding machine (12) comprising a first frame (24) and at least one tool half (16, 18) exercising relative to the first frame (24) an opening and closing movement along a first direction of movement (22), the handling apparatus (14) comprising a second frame (58) coupled to the first frame (24) as well as a gripping tool (52) and the gripping tool (52) for supplying and/or withdrawing of pieces and/or fittings along a second moving direction (54) being moved in and out between at least two tool halves (16, 18) of the injection molding machine (12),
**characterized in that** the first frame (24) and the second frame (58) are coupled movably relative to each other (86) and that the gripping tool (52) is controlled dependent on a relative position between the two frames (24, 58) when moving in and out between the tool halves (16,18).

13. Method according to claim 12,
**characterized in that** the relative position of the two frames (24, 58) is fixed before the moving in of the gripper tool (52) by means of coupling means (36, 38, 40, 42; 36, 38, 90, 92) and is released again (41, 43; 93, 95) after the moving in of the gripper tool (52).

14. Method according to claim 12 or 13,
**characterized in that** the relative position of the two frames (24, 58) is adjusted to a predetermined value (41, 43; 93, 95) before each moving in of the gripper tool (52) and that the gripper tool (52) is controlled dependent on the predetermined value.

15. Method according to claim 12 or 13,
**characterized in that** the relative position of the two frames (24, 58) is detected by measuring means (70) before each moving in of the gripper tool (52).

16. Method according to claim 15,
**characterized in that** the gripper tool (52) is controlled dependent on the detected relative position.

## Revendications

1. Dispositif de moulage par injection de matière plastique, avec une presse d'injection de matière plastique (12) et un appareil de manutention (14) pour introduire des pièces et/ou accessoires dans la presse d'injection (12) et/ou les en extraire, la presse d'injection (12) comportant un premier châssis (24) et au moins un demi-moule (16, 18) apte à être déplacé par rapport au premier châssis (58) dans une première direction (22), l'appareil de manutention (14) comportant en outre un second châssis (58) et les châssis (24, 28) étant couplés l'un à l'autre par le biais d'éléments de liaison (34, 66 ; 80 ; 90), **caractérisé en ce que** les deux châssis (24, 58) sont couplés mobiles (86) l'un par rapport à l'autre le long d'au moins un premier axe (x).

2. Dispositif de moulage par injection selon la revendication 1, **caractérisé en ce que** le premier axe (x) est parallèle à la première direction de déplacement (22).

3. Dispositif de moulage par injection selon la revendication 2, **caractérisé en ce que** le premier châssis (24) et le second châssis (58) sont couplés l'un à l'autre de manière rigide le long d'un deuxième axe (z).

4. Dispositif de moulage par injection selon la revendication 3, **caractérisé en ce que** le deuxième axe (z) est transversal au premier axe (x).

5. Dispositif de moulage par injection selon la revendication 3 ou 4, **caractérisé en ce que** l'appareil de manutention (14) comporte un outil de préhension (52) mobile par rapport au deuxième châssis (58) dans une deuxième direction de déplacement (54, 88), de préférence parallèle au deuxième axe (z).

6. Dispositif de moulage par injection selon l'une des revendications 1 à 5, **caractérisé en ce qu'**au moins un des deux châssis (24, 58) comporte des moyens d'accouplement (36, 38, 40, 42 ; 36, 38, 90, 92) permettant de fixer entre eux de manière amovible le premier châssis (24) et le deuxième châssis (58).

7. Dispositif de moulage par injection selon l'une quelconque des revendications 1 à 6, **caractérisé en ce qu'**au moins un des deux châssis (24, 58) comporte des moyens de réglage (36, 38, 40, 42 ; 36, 38, 90, 92) permettant de régler la position relative des deux châssis (24, 58).

8. Dispositif de moulage par injection selon l'une des revendications 1 à 7, **caractérisé en ce qu'**il comporte des moyens de mesure (70) permettant de relever la position relative des deux châssis (24, 58).

9. Dispositif de moulage par injection selon l'une des revendications 1 à 8, **caractérisé en ce qu'**il comporte, pour commander le mouvement d'introduction et de retrait de l'outil de préhension (52), des moyens de commande (46) auxquels sont envoyés des signaux (48, 72) informant sur la position relative des deux châssis (24, 58).

10. Dispositif de moulage par injection selon l'une des revendications 1 à 9, **caractérisé en ce que** les éléments de liaison (34, 66 ; 80 ; 90) comportent des moyens réduisant les frottements (82, 84), de préférence des éléments de glissement (82, 81) et de manière particulièrement préférentielle des roulements linéaires.

11. Dispositif de moulage par injection selon l'une des revendications 1 à 10, **caractérisé en ce qu'**une course du premier châssis (24) par rapport au deuxième châssis (58) est comprise entre 0,5 et 10 mm, de préférence entre 1 et 5 mm.

12. Procédé de moulage par injection de produits en matière plastique à l'aide d'un dispositif de moulage par injection de matière plastique (10), comportant une presse d'injection de matière plastique (12) et un appareil de manutention (14), la presse d'injection (12) comportant un premier châssis (24) et au moins un demi-moule (16, 18), qui effectue, par rapport au premier châssis (24), un mouvement d'ouverture et de fermeture dans une première direction (22), l'appareil de manutention (14) comportant un deuxième châssis (58) couplé au premier châssis (24) ainsi qu'un outil de préhension (52) introduit et retiré dans une deuxième direction (54) entre au moins deux demi-moules (16, 18) de la presse d'injection (12) en vue d'introduire et/ou d'extraire des pièces et/ou accessoires, **caractérisé en ce que** le premier châssis (24) et le deuxième châssis (58) sont couplés mobiles l'un par rapport à l'autre (86) et **en ce que**, lors de son introduction entre les demi-moules (16, 18) et de son retrait, l'outil de préhension (52) est commandé en fonction d'une position relative entre les deux châssis (24, 58).

13. Procédé selon la revendication 12, **caractérisé en ce que** la position relative des deux châssis (24, 58) avant introduction de l'outil de préhension (52) est figée au moyen de moyens d'accouplement (36, 38, 40, 42 ; 36, 38, 90, 92) et est débloquée (41, 43 ; 93, 95) après introduction de l'outil de préhension (52).

14. Procédé selon la revendication 12 ou 13, **caractérisé en ce que** la position relative des deux châssis (24, 58) avant chaque introduction de l'outil de préhension (52) est réglée à une valeur prédéterminée (41, 43 ; 93, 95) et **en ce que** l'outil de préhension (52) est commandé en fonction de cette valeur prédéterminée.

15. Procédé selon la revendication 12 ou 13, **caractérisé en ce que** la position relative des deux châssis (24, 58) avant chaque introduction de l'outil de préhension (52) est relevée à l'aide de moyens de mesure (70).

16. Procédé selon la revendication 15, **caractérisé en ce que** l'outil de préhension (52) est commandé en fonction de la position relative relevée.
